# EUROPEAN PATENT APPLICATION

(11) **EP 0 978 445 A2**
(43) Date of publication of application: **09.02.2000**
(21) Application number: 99306056.5
(22) Date of filing: 30.07.1999
(51) Int. Cl.: B62J 13/00, B62J 15/00

(54) **Mudguard**

(30) Priority: 01.08.1998 GB 9816843
(71) Applicant: Evans, Peter Robert, Ipswich, Suffolk IP2 9DG (GB); Jones, Paul Anthony, Ipswich, Suffolk IP2 9DG (GB)
(72) Inventor: Evans, Peter Robert, Ipswich, Suffolk IP2 9DG (GB)
(74) Representative: Copp, David Christopher

(57) **Abstract**

A mudguard 38 for guarding a cycle chain wheel 26 from mud thrown up by the front cycle wheel 12. The mudguard surrounds the forward lower quadrant of the cycle chain wheel 26, whilst leaving the side face of the chain wheel uncovered.

## Description

This invention relates to a mudguard for a bicycle, and in particular to a mudguard for protecting the drive chain against mud thrown up by the front bicycle wheel.

Although this specification refers specifically to bicycles, the invention could equally be applied to tricycles where a single front wheel is mounted for rotation in substantially the same plane as a chain wheel which drives the rear wheels. For the purposes of this specification, references to bicycles should be taken as including tricycles.

Mountain bikes are becoming increasingly popular. Mountain bikes are intended to be ridden over rough terrain, and to cope with such conditions, the bikes have chunky tyres with heavy tread patterns. These tread patterns pick up large quantities of mud when ridden in dirty conditions, and this mud is thrown backwards when the bike is being ridden, a substantial quantity of this mud from the front wheel landing on the drive chain and chain wheel. The introduction of this mud into the chain mechanism can produce heavy wear on the chain and can result in premature failure of the chain, chain wheel and rear wheel sprockets.

It is an object of this invention to reduce this damage to the chain, chain wheel and sprockets.

Chain guards for use on bicycles are very well known. However the purpose of the chain guards known up till now has been to protect the rider and the rider's clothes from the oil on the chain. The purpose of the present invention is quite different, i.e. to prevent the chain becoming contaminated with dirt from the road or other surface on which the cycle is being ridden.

According to the invention there is provided a mudguard for a cycle, the mudguard being adapted to surround the forward lower quadrant of the cycle chain wheel, whilst leaving the side face of the chain wheel uncovered.

It is important that the side face of the chain wheel be left uncovered, because access to this face of the wheel is often needed if the chain jumps off the chain wheel, which can happen particularly when the chain wheel is made up of a number of side by side sprockets of different sizes, and the chain is intended to be moved between these sprockets to change gear.

The mudguard is particularly intended for cycles with derailleur gears where the chain feeds onto and feeds off from the chain wheel at different angles, depending upon the gear selected at any one time.

The mudguard may include an extension piece, extending along and underneath the forward part of the frame, to protect the rider from mud thrown up from the front wheel.

Still further, the mudguard may incorporate a component which is adapted to surround at least part of the upper rear quadrant of the chain wheel, to protect the chain against dirt thrown up by the rear wheel.

The invention will now be further described, by way of example, with reference to the accompanying drawing, in which:
- Figure 1: is a perspective view of a bicycle with a mudguard in accordance with the invention;
- Figure 2: is a side view of a bicycle with a mudguard in accordance with the invention;
- Figure 3: is a view, on a larger scale, of the bicycle of Figure 2 showing the mudguard and the part of the bicycle to which the guard is attached;
- Figures 4 and 5: are two opposite perspective views showing the mudguard separated from the bicycle;
- Figure 6: shows the mudguard in plan view;
- Figures 7 and 8: are side views of the mudguard separated from the bicycle;
- Figure 9: is a view corresponding to the view of Figure 2, but showing the bicycle from the opposite side;
- Figures 10 and 11: show, respectively, the mudguard from in front and behind, with the chain wheel and pedal cranks in place;
- Figures 12a, 12b and 12c: show sections through the mudguard on the lines A-A, B-B and C-C from Figure 3; and
- Figure 13: is a section through the cycle down tube and mudguard on the line D-D from Figure 9

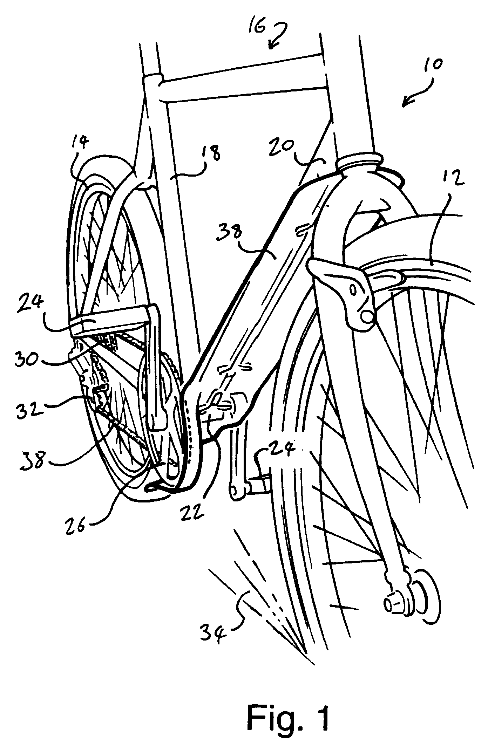

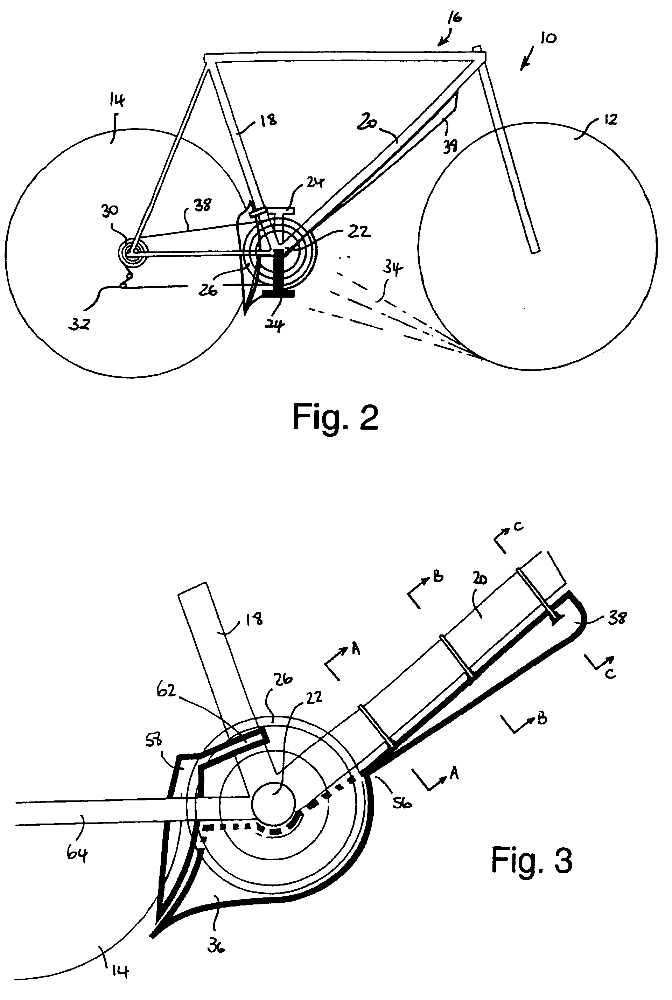

Figures 1 and 2 show a bicycle 10 with a front wheel 12 and a rear wheel 14 mounted on a frame 16. The frame has a down tube 18 and a front tube 20. These tubes meet at a bottom bracket 22 where there is a bearing which carries the pedal cranks 24 and a chain wheel 26.

It is well known, particularly for performance cycles, to have a number of side by side chain wheels (usually 2 or 3) each of different diameter, and for a mechanism to be provided to move the chain from one wheel to the other to change gear ratio. Where references are made in this specification to "chain wheel", this is to be understood as including an assembly of side by side chain wheels, all on the same axis.

The bicycle chain is indicated at 28 and this passes round a multi-sprocket hub 30 on the rear wheel and a derailleur mechanism 32 which is indicated only schematically. It will be appreciated that, as the gear ratio is changed by moving the chain from sprocket to sprocket on the hub 30 and from chain wheel to chain wheel 26, that the angle at which the chain 28 approaches the chain wheel 26 and the angle at which it leaves the chain wheel will vary.

When the bicycle is being ridden, particularly when it is being ridden fast over rough terrain, mud and dirt will be sprayed up from the front wheel as indicated schematically at 34. This will impinge on the chain and chain wheel. As mud includes abrasive particles, when the mud gets in between the chain and the chain wheel, it will cause wear on both the chain and the chain wheel. This can lead to premature failure of one or both of these components.

Figure 3 is a detail of the bottom bracket area of the cycle, with the mudguard of the invention shown in heavy lines. The mudguard has a main part 36 which, in the view shown in Figure 3, is positioned behind and beneath the chain wheel and extends below at least the front lower quadrant of the chain wheel. The mudguard also has a forward extension 38 which extends up the underside of the front tube 20 to protect the rider from dirt thrown up by the front wheel.

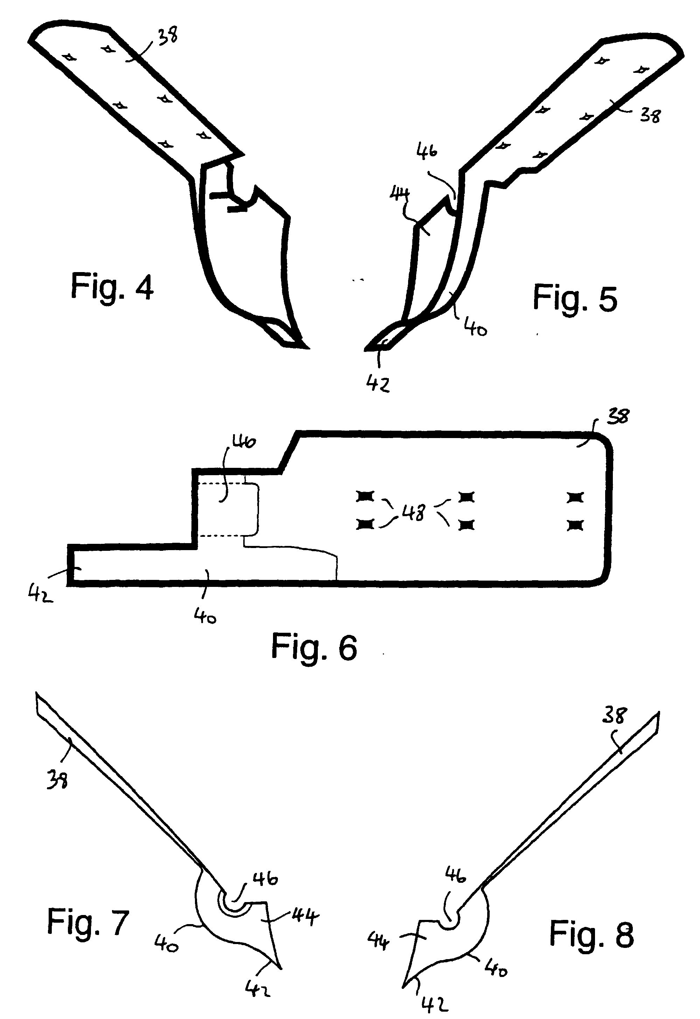

The shape of the mudguard 36, 38 is shown in more detail in Figures 4 to 8. Figure 5 in particular shows the lower face 40 of the guard which will extend beneath the chain wheel and which ends in a downwardly angled extension 42 to allow for the different chain angles as gear changes are made. The guard is attached to the bottom bracket 22 through a side flange 44 which has a part-circular cut-out at 46, and a lateral extension which can be connected to the bottom bracket by fasteners (for example cable ties) passing around the lateral extension and around the bottom bracket of the bicycle frame.

The side flange 44 will then extend over the side of the chain wheel 26 facing the bicycle frame. However the side of the chain wheel facing outwards will not be covered by the guard so that if the rider needs access to this side of the chain wheel, typically to put the chain onto the chain wheel, he can do so without being obstructed in any way by the mudguard.

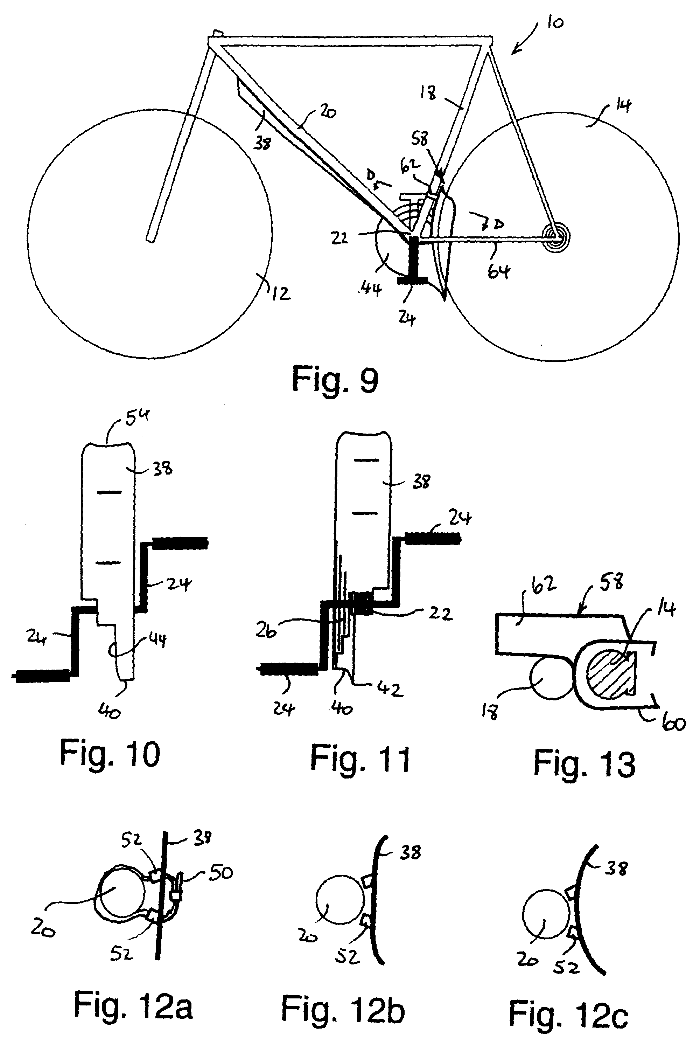

The forward extension 38 is wider than the diameter of the front tube 20, and has pairs of apertures 48 as shown to enable the guard to be strapped to the tube 20. This can be seen particularly in Figures 3, 12a, 12b and 12c. As shown in Figure 12a, a cable tie 50 can be passed through the holes 48, through rubber bushes 52 and around the tube 20. When the cable tie 50 is pulled tight, the bushes 52 will fit snugly up against the tube 20 to hold the extension 38 in place. It will be seen, particularly from Figures 12b and 12c that the cross-sectional shape of this forward extension becomes more curved with distance away from the bottom bracket 22 to catch mud and dirt which might otherwise be thrown up against the body of the rider.

The mudguard is preferably made from plastics. It could be vacuum formed from an initially flat plastic sheet, or could be injection moulded. It will be appreciated that the curvature required is quite complex.

Figures 10 and 11 show how the guard appears in front and rear views. In these figures, some parts of the bicycle have been omitted for clarity. It will also be seen from these views that the front extension 38 is secured to the tube 20 by only two fastenings rather than the three shown in Figure 3, and that the top edge of the guard has a scalloped part at 54.

The angle which the front tube 20 makes to the ground varies between different makes of bicycle. However the fact that the front extension 38 is connected to the chain guarding portion 40 by a part of the guard which is not curved, allows there to be effectively a hinge at 56 (Figure 3), so that the extension 38 can extend at a range of angles to the chain guarding part 36 of the mudguard.

The mudguard also includes a portion (which may be separate or may be integral with the mudguard 36, 38) to protect the chain from dirt carried by the rear wheel 14. This portion 58 surrounds part of the circumference of the rear wheel 14, as can be seen particularly from Figure 13 where the wheel 14 travels, over a limited arc within a shielded portion 60. This guard portion can be attached to the down tube 18 by a bracket 62, and the shielded portion 60 preferably lies within the frame bars 64 which form the lower support for the bicycle rear wheel.

The mudguard described here is very effective in providing the necessary protection for a bicycle chain, particularly on a bicycle which is being ridden, as mountain bikes are, in extreme conditions. By preventing dirt collecting on the chain, the useful life of the chain is considerably extended.

## Claims

1. A mudguard for a cycle which has a driven wheel, a sprocket on the driven wheel, a sprocketed chain wheel and a drive chain forming a driving connection between the sprockets, the mudguard being adapted to surround the forward lower quadrant of the cycle chain wheel, whilst leaving the side face of the chain wheel uncovered.

2. A mudguard as claimed in Claim 1, for cycles with derailleur gears where the chain feeds onto and feeds off from the chain wheel at different angles, depending upon the gear selected at any one time.

3. A mudguard as claimed in Claim 1 or Claim 2, including an extension piece, adapted to extend along and underneath the forward part of the frame, to protect the rider from mud thrown up from the front wheel.

4. A mudguard as claimed in any preceding claim, wherein incorporating a component which is adapted to surround at least part of the upper rear quadrant of the chain wheel, to protect the chain against dirt thrown up by the rear wheel.

5. A mudguard as claimed in any preceding claim, constructed from sheet plastics material.

6. A mudguard as claimed in any preceding claim, having means by which it can be secured to a cycle front tube.

7. A mudguard as claimed in any preceding claim, having an elongate portion adapted to be secured to a cycle frame, and of width greater than that of the frame to which it will be secured, and a chain wheel guarding portion depending from the elongate portion.

8. A mudguard as claimed in Claim 7, wherein the elongate portion is concave in cross-section with, in use, the concave face facing toward the cycle front wheel.
